# FASCICULE DE BREVET EUROPEEN

(11) **EP 2 879 460 B1**
(45) Date de publication et mention de la délivrance du brevet: **15.05.2019**
(21) Numéro de dépôt: 14194937.0
(22) Date de dépôt: 26.11.2014
(51) Int. Cl.: H04W 84/18, H04L 29/08

(54) **Noeud d'un réseau radio ad-hoc multibond amélioré, et procédé associé**
Knoten eines verbesserten Multibond-Ad-hoc-Radionetzes, und entsprechendes Verfahren
Node of an improved multi-hop ad-hoc radio network, and associated method

(30) Priorité: 28.11.2013 FR 1302758
(43) Date de publication de la demande: 03.06.2015
(73) Titulaire: Thales, 92200 Neuilly Sur Seine (FR)
(72) Inventeur: Lim, David, 92622 GENNEVILLIERS CEDEX (FR); Fouillot, Pascale, 92622 GENNEVILLIERS CEDEX (FR); Conan, Vania, 92622 GENNEVILLIERS CEDEX (FR); Lavaux, Damien, 92622 GENNEVILLIERS CEDEX (FR); Pirez, Didier, 92622 GENNEVILLIERS CEDEX (FR)
(74) Mandataire: Lavoix

(56) Documents cités:
- US-A1- 2013 110 462
- CHEN ZHILIANG ET AL: "Reducing aggregation Bias and time in gossiping-based wireless sensor networks", 2013 IEEE 14TH WORKSHOP ON SIGNAL PROCESSING ADVANCES IN WIRELESS COMMUNICATIONS (SPAWC), IEEE, 16 juin 2013 (2013-06-16), pages 165-169, XP032490421, ISSN: 1948-3244, DOI: 10.1109/SPAWC.2013.6612033 [extrait le 2013-09-25]
- ZUBAIRI J A ET AL: "Ambulatory data aggregation and reduction for transmission over limited bandwidth network", COLLABORATIVE TECHNOLOGIES AND SYSTEMS, 2009. CTS '09. INTERNATIONAL SYMPOSIUM ON, IEEE, PISCATAWAY, NJ, USA, 18 mai 2009 (2009-05-18), pages 356-360, XP031469710, ISBN: 978-1-4244-4584-4
- HONGQIANG ZHAI ET AL: "A Distributed Packet Concatenation Scheme for Sensor and Ad Hoc Networks", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 octobre 2005 (2005-10-17), pages 1-7, XP010901378, DOI: 10.1109/MILCOM.2005.1605880 ISBN: 978-0-7803-9393-6

## Description

L'invention a pour domaine celui des réseaux radio ad-hoc multibonds. Plus particulièrement l'invention a pour domaine celui des réseaux radio ad-hoc multibonds mobiles et en forte densité.

Dans les réseaux radio ad-hoc mobiles, la connectivité varie considérablement dans le temps et l'espace. Par connectivité, on entend la possibilité d'un noeud d'accéder à la ressource radio afin d'émettre, sans perturbation, un signal et celle des autres noeuds d'accéder à la ressource au même instant pour recevoir le signal émis.

Ces problèmes sont exacerbés dans le cas d'une forte densité de noeuds.

Parmi les réseaux radio ad-hoc, on connaît les réseaux mettant en oeuvre un protocole de routage. Cependant pour maintenir une vision de la topologie du réseau à chaque instant, ces réseaux nécessitent une mise à jour constante de la cartographie de la topologie, ainsi qu'une propagation des informations correspondantes à travers le réseau au moyen de paquets de signalisation adaptés. Pour des réseaux en forte densité, le maintien d'une telle cartographie devient extrêmement difficile et complexe à mettre en oeuvre. Les paquets de signalisation limitent encore la connectivité.

On connaît également des réseaux radio ad-hoc ne nécessitant pas de protocole de routage. Il s'agit des réseaux radio ad-hoc multi-bonds mettant en oeuvre un service de diffusion du type inondation.

De manière générale, dans les réseaux radio ad-hoc, chaque noeud est susceptible d'agir non seulement comme émetteur ou récepteur d'un paquet de donnée, mais également comme relayeur d'un paquet de donnée entre l'émetteur et le destinataire.

Dans ce contexte, différents services de diffusion de paquets de données peuvent être mis en oeuvre.

Un service de diffusion simple à mettre en oeuvre est un service du type inondation (« flooding » en anglais), dans lequel un émetteur souhaitant échanger une donnée avec un destinataire, transmet un message comportant cette donnée vers l'ensemble de ces voisins, c'est-à-dire l'ensemble des noeuds en portée radio de l'émetteur. A son tour, chaque noeud voisin, agissant comme relais, transmet un message comportant cette donnée vers l'ensemble de ses voisins. De proche en proche, la donnée est diffusée dans tout le réseau. Elle finit entre autre par atteindre le destinataire souhaité.

Cependant, dans le cas d'un réseau radio ad-hoc en forte densité, un service de diffusion du type inondation, dans lequel tout le monde émet vers tout le monde, ne convient pas à cause du grand nombre de paquets émis et réémis par les différents noeuds pour la diffusion d'une seule donnée. Il y a donc une forte probabilité de collision des signaux et une dégradation de la connectivité.

Pour un réseau radio ad-hoc multibonds mobile et en forte densité, le document EP 2 440 001 A1 divulgue un noeud comportant un moyen de contrôle d'accès à la ressource radio (MAC selon l'acronyme anglais « *Médium Access Control* ») mettant en oeuvre un procédé de contention dynamique d'accès à la ressource.

Plus précisément, les différents noeuds du réseau sont synchronisés. L'accès à la ressource radio est subdivisé en trames temporelles. Un noeud est autorisé à accéder à la ressource toutes les Q trames. La période Q est variable et sa valeur est adaptée dynamiquement en fonction de l'utilisation de la ressource faite par le noeud considéré et ses voisins. De plus, une trame est subdivisée en une pluralité de créneaux temporels. Dans une trame autorisée, un noeud est propre à sélectionner de manière aléatoire le créneau dans lequel il émet un paquet de données.

Ainsi, dans le document EP 2 440 001 A1, chaque noeud est propre à estimer un nombre de noeuds voisins V en fonction du nombre de collisions détectées sur les différents créneaux d'une pluralité de trames successives. Lorsque le nombre de voisins estimé V augmente, le noeud demande à ses voisins d'augmenter leur période d'émission Q.

Cependant, dans les réseaux radio ad-hoc en forte densité mettant en oeuvre un service de diffusion du type inondation, la mise en oeuvre d'un procédé de contention de paquets peut ne pas être suffisante.

On connaît par ailleurs, par exemple du document CHEN ZHILIANG ET AL. "Reducing aggregation bias and time in gossiping-based wireless sensor networks", 2013 IEEE 14TH WORKSHOP ON SIGNAL PROCESSING ADVANCES IN WIRELESS COMMUNICAIIONS (SPAWC), IEEE, 16 juin 2013 (201 3-06-1 6), pages 165-169, XPO32490421, ISSN : 1948-3244, DOI: 10.11.09/SPAWC.2013.6612033, dans un réseau ad-hoc mettant en oeuvre un service de diffusion avec communications aléatoires (« random gossiping »), la capacité d'un noeud de calculer la valeur d'une fonction agrégeant des mesures effectuées par des capteurs associés aux différents noeuds du réseau. Cependant, cette valeur calculée est biaisée par le fait qu'il n'est pas possible de savoir combien de fois une mesure particulière est prise en compte.

On connaît également, par le document US 2013/110462 A1, dans un réseau ad-hoc mettant en oeuvre un service de diffusion par inondation, la capacité d'un noeud d'élaborer un paquet à émettre en combinant les informations provenant de plusieurs paquets incidents.

Par ailleurs, l'article HONGQIANG ZHAI et al. "A Distributed Packet Concatenation Scheme for Sensor and Ad Hoc Networks", MILITARY COMMUNICATION CONFERENCE, 2005, MILCOM 2005, IEEE ATLANTIC CITY, NJ, USA 17 - 20 OCT. 2005, pages 1-7 divulgue un noeud qui, lorsque le canal d'émission de sa couche MAC est encombré, est propre à concaténer plusieurs paquets courts à destination d'un même noeud, de manière à obtenir un paquet long ou « super-paquet ». La concaténation consiste à écrire dans la partie de charge utile du super-paquet, les charges utiles des paquets courts. Ainsi, la partie d'en tête est mutualisée et l'encombrement sur le réseau réduit.

L'invention a donc pour but de pallier ce problème.

Pour cela l'invention a pour objet un noeud d'un réseau radio ad-hoc multibond comme défini par la première revendication.

L'invention et ses avantages seront mieux compris à la lecture de la description qui va suivre, donnée uniquement à titre d'exemple illustratif et non limitatif, et faite en se référant aux dessins annexés sur lesquels :
- la figure 1 est une représentation d'un réseau radio ad-hoc multi-bandes en forte densité ;
- la figure 2 présente la structure d'un paquet de données échangé sur le réseau de la figure 1 ;
- la figure 3 est une représentation schématique sous forme de blocs d'un noeud du réseau de la figure 1 comportant un dispositif de diffusion amélioré ; et,

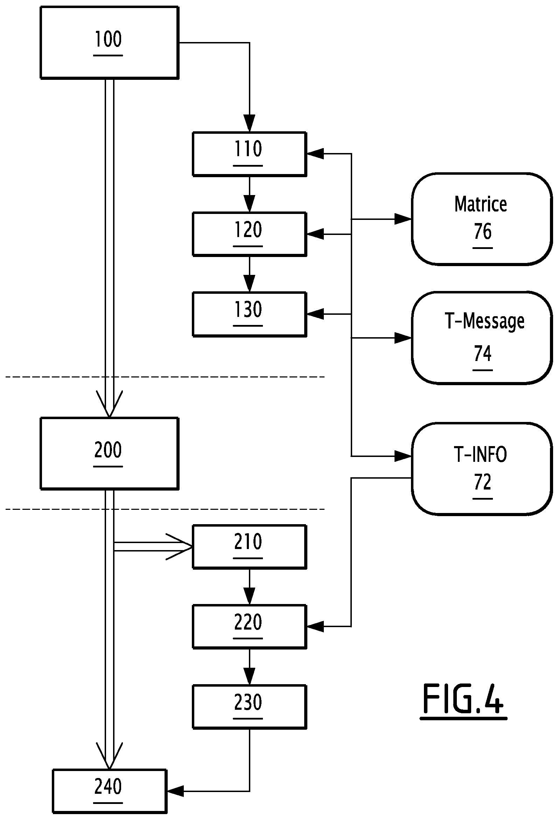

- la figure 4 est une représentation schématique du procédé de diffusion mis en oeuvre par le service du noeud de la figure 3.

De manière générale, un noeud N comporte un dispositif de diffusion associant un moyen de contrôle d'accès à la ressource du type à contention dynamique et un moyen de codage réseau.

Un noeud émetteur souhaite diffuser des informations vers l'ensemble des noeuds du réseau.

Le codage réseau (« network coding » en anglais) consiste à combiner entre elles les différentes informations à diffuser. Le message résultant de cette opération d'encodage est diffusé sur le réseau.

En réception, un noeud recevant ce message cherche à le décoder pour remonter aux informations dont il est la combinaison. Cette opération de décodage est effectuée grâce aux informations que le noeud récepteur possède déjà, à cet instant d'exploitation du réseau. Un message est dit utile lorsqu'il permet au noeud récepteur considéré d'améliorer le nombre des informations dont il dispose.

En transmission, un noeud génère un nouveau message à partir de tout ou d'une partie seulement des informations dont il dispose à cet instant.

Les procédés de codage réseau apparaissent ainsi comme des méthodes de transmission coopératives où chaque noeud agit comme source d'une information et/ou comme noeud encodeur d'informations. On montre que le codage réseau permet d'économiser le nombre de transmissions sur le réseau, nécessaires à la diffusion d'un groupe d'informations. En conséquence, le codage réseau est un procédé permettant d'optimiser la consommation de la bande passante radio.

Dans le mode de réalisation actuellement envisagé, l'algorithme de codage réseau mis en oeuvre par un noeud réalise une combinaison linéaire aléatoire d'informations. L'algorithme permet de générer un message par le choix aléatoire de n informations dans une table d'informations maintenue à jour par le noeud. L'algorithme effectue une opération binaire entre les bits des informations choisies, telle qu'un « ou exclusif ».

On citera comme document de l'état de la technique relatif au codage réseau, l'article de C.Fragouli et al. « *a network coding approach to energy efficiency broadcasting* », publié en 2006.

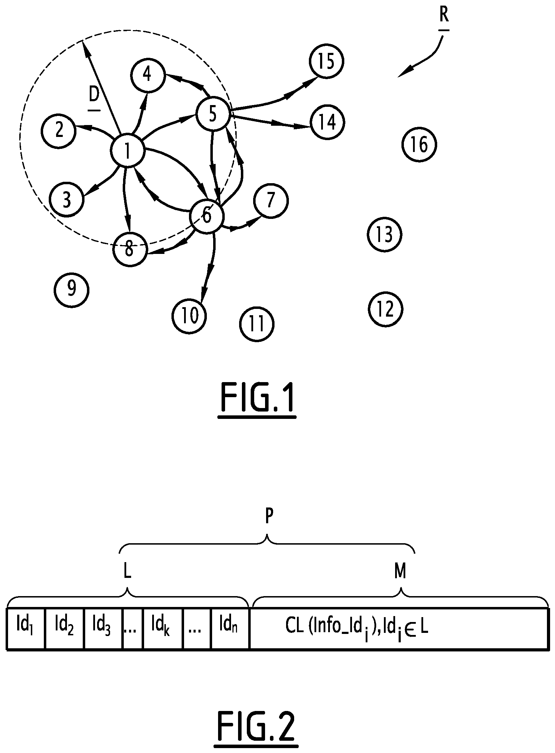

La figure 1 représente un réseau R qui est un réseau radio ad-hoc en forte densité dans lequel est mis en oeuvre un service de diffusion du type inondation.

Le réseau R comporte seize noeuds, respectivement identifié par un entier i entre 1 et 16.

Le noeud 1 souhaite échanger une donnée avec le noeud 12.

Le noeud 1 émet un premier paquet comportant la donnée. Ce paquet atteint les différents noeuds situés en portée radio du noeud 1. La portée radio est représentée schématiquement par un cercle de rayon p0. Les noeuds 2 à 6 reçoivent le premier paquet.

Dans un second temps, chaque noeud 2 à 6 émet un second paquet comportant la donnée reçue. Ce second paquet atteint les différents noeuds situés en portée radio des noeuds 2 à 6.

De proche en proche, la donnée atteint le noeud 12. Le noeud 12 peut recevoir plusieurs fois la même donnée via différents noeuds intermédiaires.

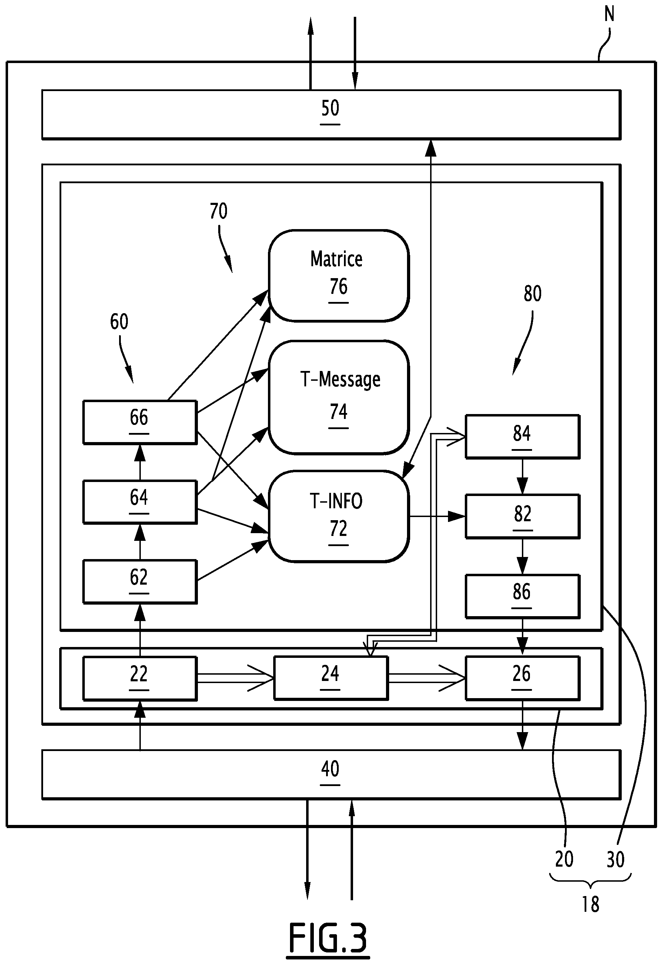

En se référant à la figure 3, un noeud N va maintenant être décrit en détail.

Un noeud est par exemple un calculateur comportant un moyen de calcul, tels qu'un processeur ; un moyen de mémorisation, tels qu'une mémoire vive et/ou morte ; des moyens d'émission/ réception de signaux radio ; et une interface d'entrée/sortie permettant à un autre calculateur connecté au noeud, d'accéder au réseau.

La mémoire du noeud N comporte les instructions d'un programme d'ordinateur, dénommé pilote de communication. Ces instructions sont destinées à être exécutées par le moyen de calcul de manière à permettre à une application exécutée par exemple sur l'autre calculateur connecté au noeud de communiquer des données sur le réseau.

En particulier, l'exécution de ce pilote permet de munir le noeud N d'un dispositif de diffusion 18.

Comme représenté sur la figure 3 le dispositif de diffusion 18 est à l'interface entre les moyens 40 d'émission/réception de signaux radio et un moyen 50 d'interface logiciel permettant des échanges d'informations avec l'autre calculateur connecté au noeud N.

Le dispositif de diffusion 18 comporte un moyen de contrôle d'accès à la ressource, dit moyen MAC 20 dans ce qui suit, et un moyen de codage réseau 30.

Le moyen MAC 20 est propre à mettre en oeuvre un procédé d'accès à la ressource par contention dynamique, conforme à celui décrit dans le document EP 2 440 001 A1.

Le moyen MAC 20 comporte un module de réception de paquets de données en provenance du moyen 40 d'émission/réception de signaux radio. Ce module est référencé par le chiffre 22 sur la figure 1. Le module de réception 22 est propre à extraire les données contenues dans un paquet incident (en-tête et charge utile) et à les transmettre au moyen de codage réseau 30.

Le module de réception 22 est également propre à extraire des paramètres relatifs au fonctionnement de la couche physique et à la qualité des paquets reçus dans les différents créneaux temporels des trames (collision de paquets, paquet lisible, etc.)

Le moyen MAC 20 comporte un module de réduction de collision 24. Le module de 24 est propre à collecter les paramètres délivrés par le module de réception 22 et à mettre en oeuvre le procédé décrit dans le document EP 2 440 001 A1, afin de calculer la période d'émission Q pour le noeud N. Ce calcul passe par l'estimation d'un nombre de noeuds voisins V.

Le module de réduction de collision 24 est propre à commander le moyen de codage réseau 30 et lui passer des paramètres de fonctionnement tel que le nombre de noeuds voisins V.

Avantageusement, après avoir commandé l'activation du moyen de codage réseau 30, le module 24 est propre à recevoir du module 30 des paramètres associés aux mécanismes de codage réseau utilisé. Il s'agit par exemple du type de codage, de la dimension du corps utilisé pour l'algorithme de codage, du seuil sur le nombre de bonds au-delà duquel une information n'est plus propagée, ou toute autre information caractérisant le mécanisme de codage réseau.

Le module 24 est alors propre à tenir compte de ces paramètres dans le calcul de la période d'émission Q,

Ceci permet en particulier au module 24 d'effectuer un calcul de Q différent selon que les informations à transmettre sur le réseau sont issues ou non d'un codage. En effet d'autres services de communication du noeud N peuvent utiliser le moyen MAC 20, et en particulier le module de transmission 26 : service de communications en point à point, ou bien en point à multi-points par exemple, qui n'impliquent pas un traitement par le module 30.

Le moyen MAC 20 comporte un module de transmission 26 propre à être appelé par le module de réduction de collision 24 au début de la trame dans laquelle le noeud N est autorisé à émettre.

Le module 26 reçoit du moyen de codage réseau 30, un paquet à transmettre. Le module 26 est propre à sélectionner de manière aléatoire le créneau de la trame dans lequel un paquet peut être transmis. Le module 26 passe le paquet au moyen 40 d'émission/réception du signal radio pour que le paquet soit émis dans la trame autorisée et le créneau sélectionné.

Le moyen de codage réseau 30 comporte un étage de réception 60, un étage de stockage 70 et un étage de transmission 80.

L'étage de stockage 70 comporte une table d'informations 72, une table des messages 74 et une matrice 76.

La table d'informations 72 comporte un premier champ d'identification de chacun des noeuds du réseau et un second champ d'information comportant, lorsque le noeud N considéré n'a pas encore pu décoder l'information générée par le noeud correspondant, à une information nulle, et lorsque le noeud N considéré a réussi à décoder l'information générée par le noeud correspondant, l'information décodée.

La table des messages 74 comporte à la ligne k un message Mk résultant de la combinaison des informations générées par les noeuds d'une liste Lk.

Enfin, la matrice 76 comporte autant de colonnes que de noeuds dans le réseau 16. La ligne k de la matrice 76 comporte, sous forme de zéros et de uns, la liste Lk des noeuds dont les informations ont été combinées pour construire le message Mk de la table des messages 74.

L'étage de réception 60 comporte un module de réception 62, un module de décodage 64 et un module de réduction de matrice 66.

Le module de réception 62 reçoit un paquet P du module 22 du moyen MAC 20.

Le module 62 est propre à lire, dans l'en-tête du paquet P, la liste L des identifiants Idk des noeuds dont les informations Infok sont combinées dans le message M contenu dans la partie de charge utile du paquet P (figure 2).

Lorsque la liste L comporte un unique identifiant, cela signifie que le message correspond à une seule information. Le module 62 est propre à stocker directement cette information dans la table d'informations 72, à la ligne correspondant au noeud identifié dans la liste L.

En revanche, si la liste L comporte plusieurs identifiants, cela signifie que le message M résulte de la combinaison de plusieurs informations. Le module 62 stocke le message M dans une nouvelle ligne k de la table des messages 74 et ajoute une nouvelle ligne k à la matrice 76. Cette nouvelle ligne est constituée de « 0 » pour chaque noeud dont l'identifiant n'apparaît pas dans la liste L et de « 1 » pour chaque noeud dont l'identifiant apparaît dans la liste L.

Le module 62 est alors propre à appeler le module de réduction de la matrice 66.

Le module 66 permet de réduire la matrice M et de simplifier en conséquence la table des messages 74.

Le module 66 est alors propre à appeler le module de décodage 64.

Le module de décodage 64 met en oeuvre un algorithme de décodage permettant de résoudre tout ou partie le système de k équations à N inconnues constitué par la matrice 76 et la table des messages 74.

Si, à l'issue du décodage, de nouvelles informations sont isolées, le module 64 est propre à stocker ces dernières dans la table d'informations 72.

L'étage de transmission 80 comporte un encodeur 82, un module de sélection de stratégie 84 et un module de génération de paquet 86.

L'encodeur 82 est propre à sélectionner n informations non nulles dans la table d'informations 72. L'encodeur 82 génère alors un message M en effectuant une combinaison linéaire des informations sélectionnées. Un opérateur « ou exclusif » (XOR) est par exemple utilisé sur les informations, sous forme binaire.

Le module de sélection de stratégie 84 est propre à appeler l'encodeur 82 en lui passant une série de variables.

Le module 84 permet d'indiquer la valeur du nombre n d'informations à combiner dans le message M. Par exemple, lorsque la densité de noeuds voisins diminue, le module 84 attribue la valeur 5 à la variable n et lorsque la densité de noeuds voisins augmente, le module 84 attribue la valeur 10 à la variable n. Il est à noter que la valeur courante de la variable n ne peut être supérieure au nombre d'informations contenues dans la table d'informations 72 à l'instant courant.

Le module 84 choisit la manière dont l'encodeur 82 sélectionne les informations. Par exemple, dans le mode de sélection « aléatoire », l'encodeur sélectionne de manière aléatoire n informations dans la table d'informations 72.

Le module de stratégie 84 est piloté par le module de réduction de collision 24 du moyen MAC 20. Le module 24 est propre à estimer le nombre V de noeuds se trouvant dans son voisinage.

Lorsque ce nombre estimé de noeuds voisins V augmente, le module 24 augmente la période Q d'émission séparant deux trames au cours desquelles le module de transmission 26 est autorisé à transmettre un paquet. Il est à souligner que le module 24 informe également les noeuds voisins de la valeur de la période Q calculée pour qu'ils adaptent la valeur de leur période d'émission. Pour ce faire, le module 24 commande le module de transmission 26 pour qu'il émette des messages de service adaptés.

Lorsque ce nombre estimé de noeuds voisins V augmente et dépasse par exemple un premier nombre V1, le module 24 est propre à requérir un encodage des informations à diffuser. Le module 24 réveille le module de sélection de stratégie 84 qui, à son tour, appelle l'encodeur 82.

De préférence, le module 24 est propre à communiquer au module de stratégie 84 le nombre estimé de noeuds voisins V.

Avantageusement, après avoir commandé le codage des informations, le module 24 tient compte de paramètres qui lui sont fournis par le module 30. Ces paramètres portent par exemple sur les propriétés associées aux mécanismes de codage réseau, tels que le type de codage, la dimension du corps utilisé, le seuil sur le nombre de bonds, ou toute autre information caractérisant le mécanisme de codage réseau.

Le module de stratégie 84 est alors propre, à partir de la valeur du nombre estimé de noeuds voisins V, à définir les variables de fonctionnement de l'encodeur 82. Par exemple, le module 84 détermine que le nombre n d'informations à encoder doit passer de 5 à 10.

Enfin, le module de génération de paquet 86 de l'étage de transmission 80 est propre à générer un paquet à partir du message M obtenu en sortie de l'encodeur 82 et des identifiants des noeuds sources des informations combinées dans ce message. Le module 86 élabore un paquet conformément au protocole illustré sur la figure 2.

Le module de génération de paquet 86 place le paquet dans une mémoire tampon que le module de transmission 26 du moyen MAC 20 est propre à lire, en vue de la prochaine émission.

Le procédé de fonctionnement du dispositif de diffusion 18 est le suivant.

Sur le réseau R, le service de diffusion fonctionne par période de génération d'informations. Un service de synchronisation des noeuds du réseau permet de définir un instant commun de début d'une période de génération d'informations et un instant commun de fin d'une période de génération. Au début de chaque période de génération, chaque noeud du réseau R souhaite diffuser une unique information dont il constitue la source..

Le service de diffusion ne transmet que les informations appartenant à la période de génération courante. Lors du passage d'une période de génération à la suivante, les données stockées dans l'étage de mémorisation 70 de chaque noeud du réseau R sont réinitialisées. En particulier, les informations de la table d'informations 72 sont jetées.

Pour le noeud N, dans une phase de fonctionnement en réception, à l'étape 100, un paquet Pk est récupéré par le module 22 du moyen MAC 20. L'indice k correspond à l'ordre de réception des paquets depuis le début de la période de génération courante. Le paquet Pk est appliqué en entrée du module de réception 62 du moyen de codage réseau 30.

A l'étape 110, le module 82 lie l'en-tête du paquet Pk et la liste Lk des identifiants des noeuds sources des informations codées dans le message Mk, contenu dans la partie de charge utile du paquet Pk.

Si la liste Lk ne comporte qu'un identifiant j, cela signifie que le message Mk correspond à une seule information Info_j, émise par le noeud source j. L'information Info_j est stockée directement dans la table d'informations 72, à la ligne j associée à l'identifiant du noeud source j.

En revanche, si la liste Lk comporte plusieurs identifiant j, le message Mk est mémorisé à la ligne k de la table des messages 74, tandis que la liste Lk est mémorisée à la ligne k de la matrice 76.

Puis, le module 62 lance l'exécution du module de réduction de matrice 66.

A l'étape 120, le module de réduction de matrice 66, à partir des informations actuellement présente dans la table d'informations 72, cherche à réduire au maximum la matrice 76.

Les combinaisons affectant les lignes de la matrice 76 sont répercutées sur les lignes de la table des messages 74.

Le module 66 lance alors le module de décodage 64.

A l'étape 130, le module de décodage 64 est exécuté afin de tenter de résoudre tout ou partie du système d'équations défini par la matrice 76 et la table des messages 74.

Si cela conduit à l'extraction de nouvelles informations Info-j, celles-ci sont stockées dans la table des informations 72.

Ainsi, au fur et à mesure de la réception des paquets, la table des informations 72 est progressivement complétée. Il n'est cependant pas certain qu'à l'instant de fin de la période de génération courante, la table des informations 72 soit intégralement complétée. Cependant, les informations présentes peuvent être suffisantes pour le fonctionnement du calculateur connecté au noeud N.

Parallèlement, le module de réception 22 du moyen MAC 20, collecte des paramètres relatifs à l'utilisation de la ressource radio et les transmet au module de réduction de collision 24.

Dans une étape intermédiaire 200, le module 24 estime le nombre de noeuds voisins V. Par le calcul de la période Q, il définit la prochaine trame dans laquelle le noeud N sera autorisé à transmettre un paquet.

Puis, durant une phase de transmission, le module 24 décide de recourir au codage réseau des messages à diffuser, de manière à réduire le nombre de paquets à émettre et, par conséquent, le nombre de collisions.

A l'étape 210, le module de réduction de collision 24 appelle le module de stratégie 84 en lui passant le nombre estimé de noeuds voisins V.

Le module de stratégie 84 ainsi réveillé, lance l'exécution de l'encodeur 82 en lui passant des variables de fonctionnement. Par exemple, le module 84 indique au module 82 qu'il doit fonctionner en mode aléatoire, en combinant dix informations.

A l'étape 220, l'encodeur 82 consulte la table d'informations 72 et y sélectionne, de manière aléatoire, dix informations non nulles, Info_m. Les informations sélectionnées sont combinées au moyen d'une opération du type « ou exclusif » de manière à obtenir un message M.

L'encodeur 82 transmet au module de transmission 86 le message M résultant de l'encodage des informations Info_m , ainsi que la liste L_m des identifiants des noeuds associés à chacune des informations combinées.

Enfin, à l'étape 230, le module de génération de paquet 86 élabore un paquet P dont l'en-tête correspond à la liste Lm et dont la partie de charge utile correspond au message M.

Le paquet ainsi créé est mis à la disposition du module de transmission 26. Ce dernier a la charge de communiquer le paquet au moyen 40 d'émission/réception pour qu'un signal adapté soit émis dans la trame autorisée par le module 26, durant un créneau sélectionné de manière aléatoire par le module 26.

Le dispositif de diffusion présenté ci-dessus permet d'optimiser le trafic de paquets en augmentant par codage le nombre d'informations par paquet et en réduisant par contention la probabilité de collisions entre paquets.

En variante, le module 84 est propre à placer l'encodeur 82 dans un mode de limitation du nombre de bonds d'une information depuis le noeud source de cette information. Pour mettre en oeuvre cette variante, l'en-tête des messages doit comporter, associé à chaque identifiant d'un noeud source d'une information, le nombre de fois que cette information a été relayée, c'est-à-dire le nombre de bond depuis la première diffusion de cette information sur le réseau. La table d'information 72 est alors modifiée pour comporter un champ supplémentaire correspondant à ce nombre de bond. Dans cette variante, l'étage de réception 60 est adapté pour mettre à jour ce nouveau champ de la table 72 avec les données contenues dans un paquet reçu. Si la même information parvient au noeud considéré par différents chemins, le nombre de bond le plus faible est retenu dans la table d'information 72. L'encodeur 82 est alors propre à sélectionner les informations de la table 72 dont le nombre de bond est inférieur à un nombre seuil de bons, valant par exemple trois. Cette variable de fonctionnement est avantageusement déterminée par le module de stratégie 84 : sa valeur est augmentée lorsque le nombre estimé de noeuds voisins est faible et réduite lorsque le nombre estimé de noeuds voisins est important.

Ainsi, la synergie entre la couche MAC et la couche de codage permet une optimisation du point de fonctionnement du réseau. Elle permet ainsi un fonctionnement du réseau avec des densités de noeuds très élevée, supérieures à celles de l'état de la technique.

## Revendications

1. Noeud d'un réseau radio ad-hoc multibonds, ledit réseau mettant en oeuvre un service de diffusion d'informations du type par inondation, ledit noeud comportant un moyen de contrôle d'accès à la ressource radio (20) propre à effectuer une contention dynamique d'accès à la ressource radio de manière à adapter dynamiquement, en fonction de l'utilisation de la ressource radio, la période avec laquelle le noeud est autorisé à accéder à la ressource radio pour l'émission d'un paquet de données,
le moyen de contrôle d'accès à la ressource radio (20) comportant un module de réception (22), un module de réduction de collision (24) et un module de transmission (26),
le module de réception (22) étant propre à extraire les données contenues dans un paquet incident et à les transmettre à un moyen de codage réseau (30) et à extraire des paramètres relatifs à l'utilisation de la ressource radio et à les transmettre au module de réduction de collision (24) ; et,
le module de réduction de collision (24) étant propre à estimer un nombre de noeuds voisins (V),
**caractérisé en ce que** le moyen de codage réseau (30) comporte :
- un étage de stockage (70), comportant une table d'informations (72) comportant une pluralité d'informations à diffuser, la table d'informations comportant un premier champ d'identification de chacun des noeuds du réseau et un second champ d'information comportant, lorsque le noeud n'a pas encore pu décoder l'information générée par le noeud correspondant du réseau, une information nulle, et, lorsque le noeud a réussi à décoder l'information générée par le noeud correspondant du réseau, l'information décodée ;
- un étage de réception (60) de paquets de données, reçus depuis le moyen de contrôle d'accès à la ressource radio (20), propre à décoder les messages contenu dans les paquets de données reçus de manière à enrichir ladite table d'informations (72) de l'étage de stockage ; et,
- un étage de transmission (80), propre à générer un paquet de données à partir de tout ou partie de ladite pluralité d'informations à diffuser, l'étage de transmission (80) comportant un module de stratégie (84), un module d'encodage (82) et un module de transmission (86),
le module de stratégie (84) étant propre à déterminer un nombre n d'informations à combiner dans un message et à l'indiquer au module d'encodage (82) ;
le module d'encodage (82) étant propre à sélectionner de manière aléatoire n informations non nulles dans la table d'informations (72) et à générer un message par application d'un algorithme de codage réseau réalisant une combinaison linéaire des informations sélectionnées, l'algorithme effectuant une opération binaire entre les bits des informations sélectionnées ; et,
le module de génération de paquets (86) étant propre à générer un paquet de données de manière à ce que ledit paquet comporte, dans une partie de charge utile, le message (M), et dans une partie d'en-tête, une liste (L) des identifiants (Idₖ) des informations combinées dans ledit message, le paquet de données ainsi généré étant mis à la disposition du moyen de de contrôle d'accès à la ressource radio (20),
l'étage de réception (60) comportant un module de réception (62), un module de décodage (64) et un module de réduction de matrice (66), le module de réception (62) étant propre à : recevoir un paquet (P) du module de réception (22) ; lire, dans l'en-tête du paquet (P), la liste (L) des identifiants (Idk) des noeuds du réseau dont les informations (Infok) sont combinées dans le message (M) contenu dans la partie de charge utile du paquet (P) ; lorsque la liste (L) comporte un unique identifiant, stocker l'information dans la table d'informations (72) à la ligne correspondant au noeud du réseau identifié dans la liste (L) ou, lorsque la liste (L) comporte plusieurs identifiants, stocker le message (M) dans une nouvelle ligne (k) d'une table des messages (74) et à ajouter une nouvelle ligne (k) à une matrice (76) constituée de « 0 » pour chaque noeud du réseau dont l'identifiant n'apparaît pas dans la liste (L) et de « 1 » pour chaque noeud du réseau dont l'identifiant apparaît dans la liste (L) ; et appeler le module de réduction de la matrice (66), le module de réduction de matrice (66) permettant de réduire la matrice (76) et de simplifier en conséquence la table des messages (74), avant d'appeler le module de décodage (64), le module de décodage (64) mettant en oeuvre un algorithme de décodage permettant de résoudre tout ou partie le système de d'équations constitué par la matrice (76) et la table des messages (74) et lorsqu'à l'issue du décodage, de nouvelles informations sont isolées, le module de décodage (64) est propre à stocker ces dernières dans la table d'informations (72),
et **en ce que** le module de réduction de collision (24) est propre à passer le nombre estimé de noeuds voisins au module de stratégie (84) pour déterminer la valeur du nombre n d'informations à combiner,
le module de réduction de collision (20) étant ainsi propre à commander le moyen de codage réseau (30) pour générer un paquet de données.

2. Noeud selon la revendication 1, dans lequel l'étage de stockage (70) comporte, outre ladite table d'informations (72), une matrice (76) associée à une table des messages (74).

3. Noeud selon la revendication 1 ou la revendication 2, dans lequel le module d'encodage (82) est propre à générer un message par combinaison linéaire des n informations sélectionnées dans la table d'informations (72).

4. Noeud selon l'une quelconque des revendications 1 à 3, dans lequel le module d'encodage (82) est propre à sélectionner de manière aléatoire les n informations à combiner.

## Patentansprüche

1. Knoten eines Multihop-Ad-Hoc-Funknetzwerks, wobei das Netzwerk einen Dienst zur Verteilung von Informationen vom Überflutungstyp durchführt, wobei der Knoten ein Mittel zum Kontrollieren des Zugriffs auf die Funkressource (20) aufweist, geeignet zum Durchführen eines dynamischen Wettstreits um den Zugriff auf die Funkressource auf die Art, abhängig von der Verwendung der Funkressource die Zeitdauer, während der der Knoten autorisiert ist, auf die Funkressource zum Senden eines Datenpakets zuzugreifen, dynamisch angepasst wird,
wobei das Mittel zum Kontrollieren des Zugriffs auf die Funkressource (20) ein Empfangsmodul (22), ein Kollisionsverringerungsmodul (24) und ein Übertragungsmodul (26) aufweist,
wobei das Empfangsmodul (22) geeignet ist, die in einem eingehenden Paket enthaltenen Daten zu extrahieren und sie an ein Netzwerkkodiermittel (30) zu übertragen und Parameter bezüglich der Verwendung der Funkressource zu extrahieren und sie an das Kollisionsverringerungsmodul (24) zu übertragen; und,
wobei das Kollisionsverringerungsmodul (24) geeignet ist zum Schätzen einer Anzahl von Nachbarknoten (V),
dadurch charakterisiert, dass das Netzwerkkodiermittel (30) aufweist:
- Eine Speicherstufe (70), aufweisend eine Informationstabelle (72), die eine Mehrzahl von zu verteilenden Informationen aufweist, wobei die Informationstabelle ein erstes Feld zur Identifikation jedes der Knoten des Netzwerks und ein zweites Informationsfeld aufweist, das, wenn der Knoten die von dem entsprechenden Knoten des Netzwerks erzeugte Information noch nicht dekodieren konnte, eine ungültige Information aufweist und wenn es dem Knoten gelungen ist, die von dem entsprechenden Knoten des Netzwerks erzeugte Information zu dekodieren, die dekodierte Information aufweist;
- Eine Stufe zum Empfangen (60) von Datenpaketen, empfangen von dem Mittel zum Kontrollieren des Zugriffs auf die Funkressource (20), geeignet zum Dekodieren der in den Datenpaketen enthaltenen Nachrichten, so dass die Informationstabelle (72) der Speicherstufe angereichert wird; und,
- eine Übertragungsstufe (80), geeignet zum Erzeugen eines Datenpakets ausgehend von allen oder einem Teil der Mehrzahl von zu verteilenden Informationen, wobei die Übertragungsstufe (80) ein Strategiemodul (84), ein Kodiermodul (82) und ein Modul zum Erzeugen von Paketen (86) aufweist,
wobei das Strategiemodul (84) geeignet ist, eine Anzahl n von in eine Nachricht zu kombinierende Informationen zu ermitteln und sie dem Kodiermittel (82) anzuzeigen;
das Kodiermittel (82) geeignet ist, auf beliebige Weise n nicht-ungültige Informationen in der Informationstabelle (72) auszuwählen und eine Nachricht durch Anwenden eines Netzwerkkodieralgorithmus zu erzeugen, der eine Linearkombination der ausgewählten Daten realisiert, wobei der Algorithmus eine binäre Operation zwischen den Bits der ausgewählten Informationen durchführt; und
das Modul zum Erzeugen von Paketen (86) geeignet ist, ein Datenpaket zu erzeugen, sodass das Datenpaket in einem Nutlastteil die Nachricht (M) und in einem Nachrichtenkopfteil eine Liste (L) der Identifikatoren (Idₖ) der in der Nachricht kombinierten Informationen aufweist, wobei das so erzeugte Datenpaket dem Mittel zum Kontrollieren des Zugriffs auf die Funkressource (20) bereitgestellt wird,
die Empfangsstufe (60) ein Empfangsmodul (62), ein Dekodiermodul (64) und ein Matrixreduziermodul (66) aufweist, wobei das Empfangsmodul (62) geeignet ist zum: Empfangen eines Pakets (P) von dem Empfangsmodul (22); Lesen, in dem Nachrichtenkopf des Pakets (P), der Liste (L) der Identifikatoren (Idk) der Knoten des Netzwerks, deren Informationen (Infok) in der Nachricht (M), die in dem Nutzlastteil des Pakets (P) enthalten ist, kombiniert sind; wenn die Liste (L) einen eindeutigen Identifikator aufweist, Speichern der Information in der Informationstabelle (72) in der Zeile, die dem in der Liste (L) identifizierten Knoten des Netzwerks entspricht oder, wenn die Liste (L) mehrere Identifikatoren aufweist, Speichern der Nachricht (M) in einer neuen Zeile (k) einer Nachrichtentabelle (74) und Hinzufügen einer neuen Zeile (k) zu einer Matrix (76), die aus "0" für jeden Knoten des Netzwerks, dessen Identifikator nicht in der Liste (L) auftaucht, und aus "1" für jeden Knoten des Netzwerks, dessen Identifikator in der Liste (L) auftaucht, besteht; und Aufrufen des Matrixreduziermoduls (66), wobei das Matrixreduziermodul (66) es ermöglicht, die Matrix (76) zu reduzieren und folglich die Nachrichtentabelle (74) zu vereinfachen, vor dem Aufrufen des Dekodiermoduls (64), wobei das Dekodiermodul (64) einen Dekodieralgorithmus durchführt, der es ermöglicht, alles oder einen Teil der Gleichungen, die durch die Nachricht (76) und die Nachrichtentabelle (74) gebildet werden, zu lösen und wenn am Ende der Dekodierung neue Informationen isoliert werden, das Dekodiermittel (64) geeignet ist, letztere in der Informationstabelle (72) zu speichern,
und dadurch, dass das Kollisionsverringerungsmodul (24) geeignet ist, die geschätzte Anzahl von Nachbarknoten dem Strategiemodul (84) zuzuführen, um den Wert der Anzahl n von zu kombinierenden Informationen zu ermitteln,
wobei das Kollisionsverringerungsmittel (24) auf diese Weise geeignet ist, das Netzwerkkodierungsmittel (30) zum Erzeugen eines Datenpakets zu steuern.

2. Knoten gemäß Anspruch 1, in dem die Speicherstufe (70) außer der Informationstabelle (72) eine Matrix (76), die mit einer Nachrichtentabelle (74) assoziiert ist, aufweist.

3. Knoten gemäß Anspruch 1 oder Anspruch 2, in dem das Kodiermodul (82) geeignet ist zum Erzeugen einer Nachricht durch Linearkombination der n in der Informationstabelle (72) ausgewählten Informationen.

4. Knoten gemäß einem der Ansprüche 1 bis 3, in dem das Kodiermodul (82) geeignet ist, auf beliebige Weise die zu kombinierenden n Informationen auszuwählen.

## Claims

1. A node of a multi-hop ad-hoc radio network, said network applying an information broadcasting service of the flooding type, said node including control means for accessing the radio resource (20) able to perform a dynamic containment for accessing the radio resource so as to dynamically adapt, as a function of the use of the radio resource, the period with which the node is authorized to access the radio resource for the transmission of a data packet,
the control means for accessing the radio resource (20) comprising a reception module (22), a collision reduction module (24) and a transmission module (26),
the reception module (22) being able to extract data contained in the incoming packet and to forward them to a network coding means (30) and to extract parameters pertaining to the use of the radio resource and to forward them to the collision reduction module (24); and,
the collision reduction module (24) being able to estimate a number of neighboring nodes (V),
**characterized in that** the network coding means (30) comprises:
- a storage stage (70), including an information table (72) comprising a plurality of pieces of information to broadcast, the information table comprising a first field of identification of each of the nodes of the network and a second field of information comprising, when the node has not yet decoded the piece of information generated by the corresponding node of the network, a null information, and, when the node has succeeded in decoding the piece of information generated by the corresponding node of the network, the decode information ;
- a reception stage (60) for receiving data packets, received from the control means for accessing the radio resource (20), able to decode the messages contained in the received data packets so as to enrich said information table (72) of the storage stage; and,
- a transmission stage (80), able to generate data packets from all or part of said plurality of pieces of information to broadcast, the transmission stage (80) including a strategy module (84), an encoding module (82) and a packet generation module (86),
the strategy module (84) being able to determine a number n of pieces of information to combine in a message and to indicate it to the encoding module (82);
the encoding module (82) being able to select randomly n non null pieces of information in the information table (72) and to generate a message by applying a network coding algorithm realizing a linear combination of the pieces of information selected, the algorithm effecting a binary operation between the bits of the pieces of information selected; and,
the packet generation module (86) being able to generate a data packet, so that the packet comprises, in a payload portion, the message (M), and, in a header portion, a list (L) if identifiers (idₖ) of the pieces of information combined in sait message, the data packet thus generated being provided to the control means for accessing the radio resource (20),
the reception stage (60) includes a reception module (62), a decoding module (64), and a matrix reduction module (66), the reception module (62) being able to : receive a data packet (P) from the receiving module (22); read, in the header portion of the data packet (P), the list (L) of the identifiers (Idₖ) of the nodes of the network for which the pieces of information (Infoₖ) are combined in the message (M) contained in the payload portion of the data packet (P); when the list (L) includes a single identifier, store the piece of information in the information table (72) at the line corresponding to the node of the network identified in the list (L) or, when the list (L) includes several identifiers, stores the message (M) in a new line of a message table (74) and add a new line to a matrix (76), made up of "0s" for each node of the network for which the identifier does not appear in the list (L) and of "1s" for each node of the network for which the identifier appears in the list (L); and call upon the matrix reduction module (66), the matrix reduction module (66) allowing reducing the matrix (76) and simplifying accordingly the message table (74), before calling upon the decoding module (64), the decoding module (64) applying a decoding algorithm giving the possibility of solving all or part of the system of k equations with N unknowns formed by the matrix (76) and the message table (74), and when, at the end of the decoding, new pieces of information are isolated, the decoding module (64) is able to store the latter in the information table (72),
and **in that** the collision reduction module (24) is able to pass the number of neighboring nodes estimated to the strategy module (84) to determine the number n of pieces of information to combined,
the collision reduction module (24) being thus able to control the network coding means (30) for generating a data packet.

2. The node according to claim 1, the storage stage (70) includes, in addition to the information table (72), a matrix (76) associated with a message table (74).

3. The node according to any of claims 1 to 2, wherein the encoding module (82) is able to generate a message by linear combination of the n pieces of information selected from the information table (72).

4. The node according to any of claims 1 to 3, wherein the encoding module (82) is able to randomly select the n pieces of information to be combined.
